(19) Europäisches Patentamt
European Patent Office
Office européen des brevets

(11) **EP 1 979 644 B1**

(12) **EUROPÄISCHE PATENTSCHRIFT**

(45) Veröffentlichungstag und Bekanntmachung des Hinweises auf die Patenterteilung:
**16.12.2009 Patentblatt 2009/51**

(21) Anmeldenummer: **07711351.2**

(22) Anmeldetag: **18.01.2007**

(51) Int Cl.:
**F16D 55/46** (2006.01)

(86) Internationale Anmeldenummer:
**PCT/EP2007/000411**

(87) Internationale Veröffentlichungsnummer:
**WO 2007/082744 (26.07.2007 Gazette 2007/30)**

(54) **SELBSTVERSTÄRKENDE SCHEIBENBREMSE MIT KEILELEMENTEN**

SELF-ENERGIZING DISK BRAKE WITH WEDGE ELEMENTS

FREIN À DISQUE À AUTO-RENFORCEMENT AVEC ÉLÉMENTS DE CALAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.01.2006 DE 102006002308**

(43) Veröffentlichungstag der Anmeldung:
**15.10.2008 Patentblatt 2008/42**

(73) Patentinhaber: **KNORR-BREMSE Systeme für Nutzfahrzeuge GmbH**
**80809 München (DE)**

(72) Erfinder:
• **HERGES, Michael**
**80935 München (DE)**
• **MILLER, Bernhard**
**71263 Weil der Stadt (DE)**
• **STÖHR, Markus**
**80993 München (DE)**

(74) Vertreter: **Mattusch, Gundula**
**Knorr-Bremse AG,**
**Patentabteilung V/RG**
**Moosacher Strasse 80**
**80809 München (DE)**

(56) Entgegenhaltungen:
**DE-A1- 1 425 236        DE-B- 1 301 942**
**FR-A- 1 380 194        US-A1- 2004 154 881**
**US-A1- 2005 167 212**

**Beschreibung**

Die Erfindung betrifft eine Scheibenbremse, insbesondere eine Teilbelagscheibenbremse, mit einem elektromechanischen Aktuator und einer Zuspannvorrichtung in selbstverstärkender Bauart, die eine Keilanordnung aufweist, welche dazu ausleget ist, einen Bremsbelag gegen eine Bremsscheibe zu drücken.

Eine selbstverstärkende Scheibenbremse mit einer Keilanordnung ist beispielsweise aus der DE 1 291 951 bekannt.

Diese Schrift beschreibt eine hydraulisch zu betätigende Teilbelagscheibenbremse mit einem die Bremsscheibe umgreifenden Bremssattel bzw. -rahmen und einer von der hydraulischen Betätigungsvorrichtung unabhängigen, mit einem Seilzug zu betätigenden Zuspannvorrichtung zur Durchführung von Feststellbremsungen.

Zwischen dem Bremskolben und der Bremsbacke bzw. dem Bremsbelag sind keilförmige Platten angeordnet, die mit ihren Keilflächen aneinanderliegend, gegeneinander verschiebbar sind. und von denen die dem Bremskolben zugekehrte Platte sich am Bremszylinder oder Bremssattel bzw. -rahmen abstützt. Dabei hat die vom Bremskolben beaufschlagbare Platte die Form einer Pyramide, vorzugsweise eines Pyramidenstumpfes, mit deren bzw. mit dessen einem Schrägflächenpaar gegeneinander verschiebbare keile zur mechanischen Bremsbetätigung und mit deren anderen Schrägflächenpaar gegeneinander verstellbare Keile zum Nachstellen des Bremslüftspiels zusammenwirken.

Nachteilig an dieser Scheibenbremse ist die schlechte Regelbarkeit. Daher ist es zweckmäßig, als Aktuator einen Elektromotor einzusetzen, der den Vorteil einer guten Steuer- und Regelbarkeit besitzt. Die Regelung kann auf verschiedenste Weise rechnerisch ggf. unter Einbezug von Sensor- oder Vorgabegrößen der Bremsung erfolgen.

An einer derartigen Anordnung wäre allerdings immer noch nachteilig, dass sie einen relativ komplizierten Aufbau besäße.

Ein analoges Problem treten in Hinsicht auf die gattungsgemäße US-A-2004/0154881 oder die FR 1 380 194 A auf.

Die Erfindung hat die Aufgabe, den Aufbau der gattungsgemäßen Scheibenbremse zu vereinfachen.

Die Erfindung löst diese Aufgabe durch den Gegenstand des Anspruchs 1. Sie schafft eine Scheibenbremse, insbesondere Teilbelagscheibenbremse, mit einem elektromechanischen Aktuator und einer Zuspannvorrichtung in selbstverstärkender Bauart, die als Selbstverstärkungseinrichtung eine Keilanordnung aufweist, welche dazu ausgelegt ist, einen Bremsbelag gegen eine Bremsscheibe zu drücken, wobei zum Zuspannen des zuspannseitigen wenigstens zwei relativ zueinander bewegliche Keilelemente an einem Bremssattel bzw. -rahmen oder an einem Hilfsrahmen angeordnet sind, welche dazu ausgelegt sind, auf den Bremsbelag über eine zwischen dem Bremsbelag (8) und den Keilelementen angeordnete trapezförmige Druckplatte - Keilplatte - einzuwirken. Die Erfindung realisiert eine Auslegung dieser Anordnung derart, dass eine Einheit aus den Keilelementen und der Bremsbelageinheit in Anlage an der Bremsscheibe bei Bremsungen gemeinsam am Bremssattel oder am Hilfsrahmen parallel zur Bremsscheibenreibfläche gegen Anschläge beweglich ist, an denen sie sich bei Bremsungen abstützt.

Vorteilhaft ist die derart erreichbare Abstützung der Zuspannkräfte am Bremssattel, ohne den Aktuator zu belasten. Dabei ist die Anordnung für Bremsungen in Vorwärts- und Rückwärtsrichtung geeignet und insbesondere auch für Parkbremsungen, auch auf Fähren, wo die Neigung des Fahrzeuges ständig wechseln kann. Die Bremse besitzt zudem einen konstruktiv grundsätzlich einfachen Aufbau.

Vorteilhafte Ausgestaltungen sind den Unteransprüchen zu entnehmen.

Nachfolgend wird die Erfindung unter Bezug auf die Zeichnung anhand von Ausführungsbeispielen näher beschrieben, wobei auch die Funktion im Detail beleuchtet und weitere Vorteile der Erfindung beschrieben werden. Es zeigen:

Fig. 1a     eine schnittartige Prinzipskizze eines ersten Ausführungsbeispiel einer erfindungsgemäßen Scheibenbremse mit vereinfachter Darstellung der Zuspannvorrichtung und ohne eine Darstellung des Elektromotors als Antrieb;

Fig. 1b     einen Ausschnitt aus Fig. 1a mit einer Darstellung der Kräfte bei einer Bremsung;

Fig. 2a-d     den Ablauf einer Bremsung anhand einer filmartigen Sequenz; aufeinanderfolgender Betriebsstellungen der Bremse aus Fig. 1 während einer Bremsung;

Fig. 3     eine Darstellung der Anordnung aus Fig., 2 nach einer Umkehr der Drehrichtung;

Fig. 4     einen Teil einer Scheibenbremse nach Art der Fig. 1 mit einer Nachstellvorrichtung;

Fig. 5     einen Teil einer Variante der Scheibenbremse aus Fig. 4; und

Fig. 6 - 15     weitere Varianten selbstverstärkender Scheibenbremsen in erfinderischer Ausgestaltung; und

Fig. 16     Prinzipdarstellungen bekannter Scheibenbremsen in selbstverstärkender Bauart.

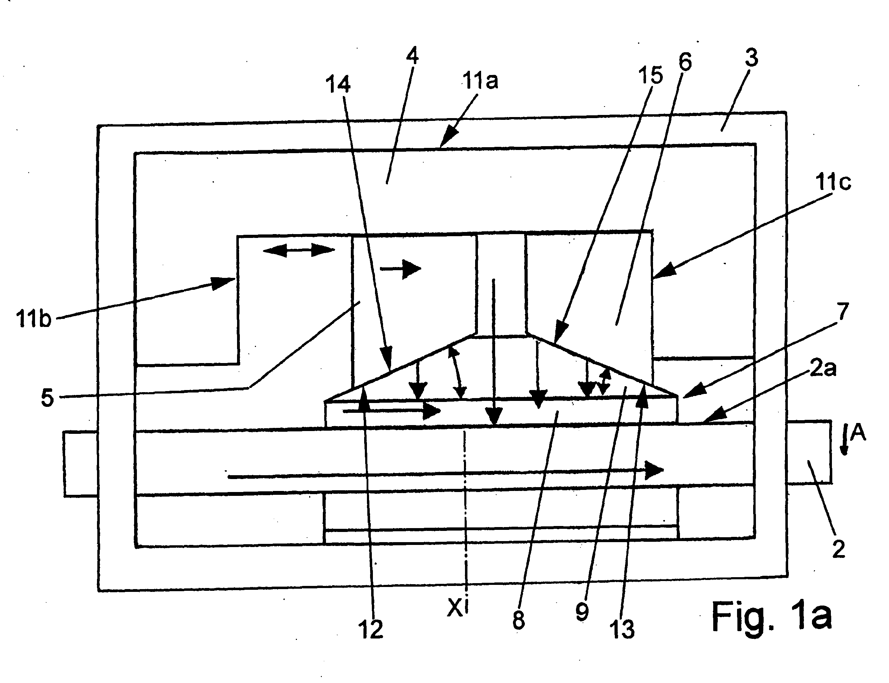

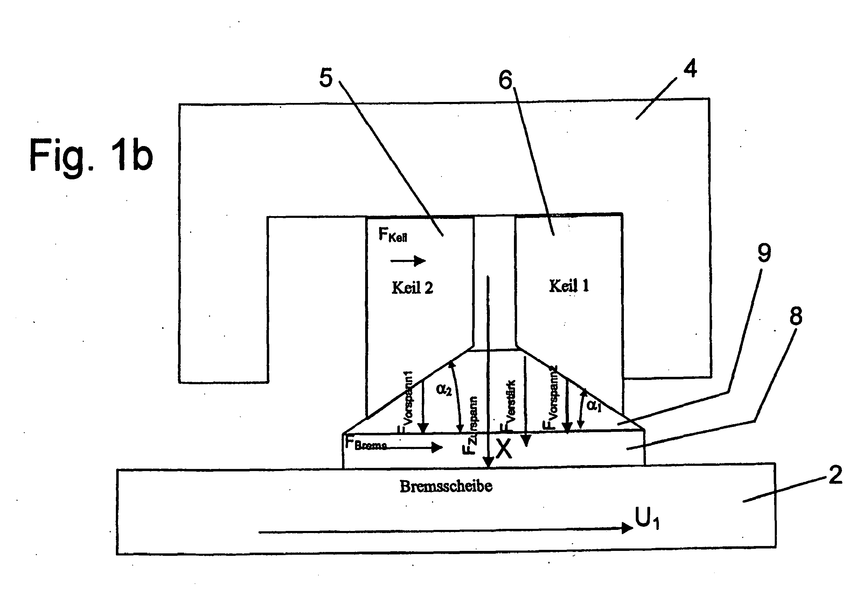

Fig.1 zeigt eine Prinzipskizze einer Scheibenbremse 1 mit einem eine Bremsscheibe 2 im oberen Umfangsrand umgreifenden Bremsrahmen 3. Innerhalb eines im Bremssattel fixierten Hilfsrahmens 4, der auch ein Teil des Bremssattels bzw. -rahmens 3 sein kann, sind zwei Keilelemente 5, 6 angeordnet. Diese Keilelemente 5, 6 sind am Hilfsrahmen 4 in Umfangsrichtung bzw. parallel zur Bremsscheibe 1 beweglich, insbesondere verschieblich geführt. Diese Verschieblichkeit kann konstruktiv auf verschiedenste Weise gelöst werden, so mittels Wälz- oder Gleitlagern und ggf. einer geeigneten Führung zwischen den Keilelementen 5, 6 und dem Hilfsrahmen 4.

Zwischen den beiden Keilelementen 5, 6 und einer zuspannseitigen Bremsscheibenreibfläche 2a ist eine Bremsbelageinheit 7 angeordnet, die aus einem Bremsbelag 8 und einer zwischen dem Bremsbelag 8 und den Keilflächen angeordneten Druckplatte 9 gebildet wird. Der Bremsbelag 8 besteht aus einer Rückenplatte und einem Belagmaterial (hier nicht dargestellt). Die Druckplatte 9 und die Rückenplatte könnten auch einstückig ausgebildet sein.

Reaktionsseitig ist zwischen dem Bremsrahmen und der Bremsscheibe 2 ein reaktionsseitiger Bremsbelag 10 angeordnet. Der Bremssattel kann ein unbeweglicher Festsattel sein, so dass die Bremsscheibe in Axialrichtung A beweglich ausgestaltet ist. Schiebesattel- und Schwenksattelkonzepte sind alternativ ebenfalls realisierbar. Zumindest der zuspannseitige Bremsbelageinheit ist sowohl parallel zur Bremsscheibendrehachse X als auch parallel zur Bremsscheibenreibfläche relativ zur Bremsscheibe 1 beweglich an dem Bremssattel angeordnet.

Der Hilfsrahmen weist eine U-Form auf und ist mit einem Grundschenkel 11a versehen, der sich parallel zur Bremsscheibenreibfläche 2a erstreckt. Er wird an seinen beiden Enden von Längsschenkeln 11b, 11c begrenzt, die sich vom Grundschenkel 7 in Richtung der Bremsscheibe erstrecken und die als Anschläge für die Keilelemente 5, 6 bei deren Bewegungen in Umfangsrichtung (in Abhängigkeit von der Drehrichtung der Bremsscheibe) dienen. Derart wird beispielhaft in beiden Drehrichtungen U1, U2 je ein Anschlag für die Keilelementen 5, 6 realisiert.

Die Druckplatte 9 weist in der Draufsicht der Fig. 1 eine Trapezform mit zwei zueinander geneigten Keilflächen 12, 13 auf, die an den ebenfalls zueinander geneigten Keilflächen 14, 15 der Keilelemente 5, 6 anliegen.

Die auf den Bremsbelag einwirkende Druckplatte bzw. Keilplatte 9 weist dabei im Schnitt bzw. in der Draufsicht der Fig. 1 von oben auf die Geometrie eines gleichschenkeligen Trapezes auf, dessen Grundfläche zum Bremsbelag gerichtet ist. Die Geometrie eines gleichschenkligen Trapezes führt zu gleichem Bremsverhalten in beiden Drehrichtungen der Scheibe (Vorwärts- und Rückwärtsfahrt). Es ist auch die Geometrie eines ungleichschenkligen Trapezes denkbar, um in beiden Drehrichtungen unterschiedliche Bremseigenschaften zu realisieren.

Die Bewegung der Keilflächenelemente 5, 6 relativ zueinander kann an sich mit beliebigen Mitteln erfolgen. Besonders bevorzugt erfolgt sie mit einer mit einem entsprechenden Außengewinde versehenen Spindel 16, die in korrespondierende Gewindebohrungen 17, 18 mit Innengewinde in den Keilelementen eingreift, wobei die Keilelemente 5, 6 in der einen Drehrichtung der elektromotorisch angetriebenen Spindel 16 aufeinander zu und in der anderen Drehrichtung der Spindel 16 voneinander weg bewegt werden.

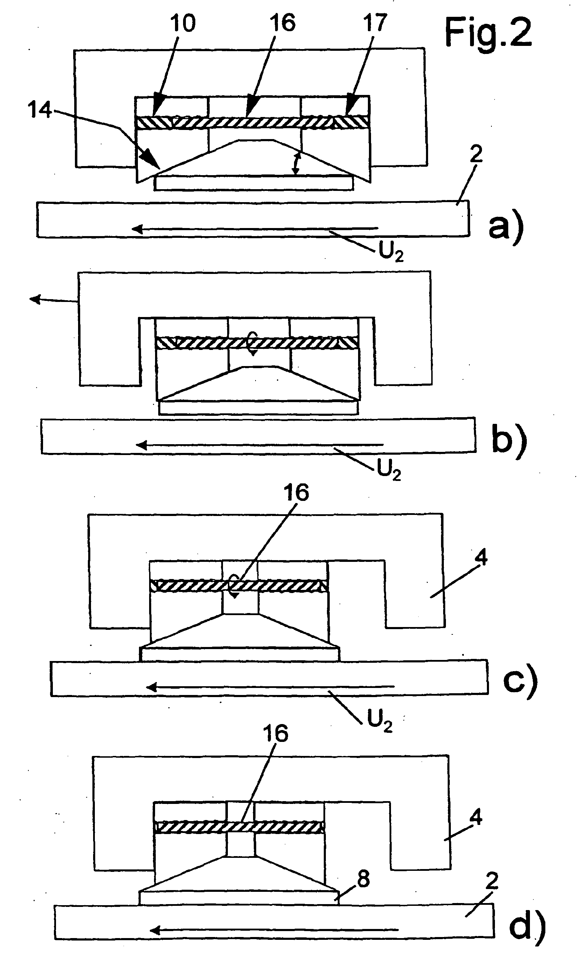

Fig. 1 zeigt den eingebremsten Zustand. Der prinzipielle Ablauf einer Bremsung ist in Fig. 2a-d wiedergegeben. Fig. 2 zeigt die Situation am zuspannseitigen Bremsbelag 8.

Fig. 2a zeigt die ungebremste Stellung, in der die Keilelemente so weit voneinander entfernt liegen, dass zwischen dem Bremsbelag 8 und der Bremsscheibe 2 das gewünschte Lüftspiel besteht.

Sodann werden die Keilelemente 5, 6 - hier durch elektromechanisch getriebenes Drehen der Spindel 15 - aufeinander zu bewegt, was die Bremsbelageinheit 7 und deren Bremsbelag 8 senkrecht (parallel zum Pfeil A) zur sich in Richtung des Pfeils U drehenden Bremsscheibe 2 verschiebt (Fig. 2b), bis der Bremsbelag 8 an der Bremsscheibe 9 zur Anlage kommt und diese an den reaktionsseitigen Bremsbelag 10 schiebt, woraufhin die Bremswirkung einsetzt, wobei sich die Bremsbelageinheit 8 in Drehrichtung (Umfangsrichtung U 1) an der Keilfläche 14 des in Umfangsrichtung vorne liegenden Keilelementes 5 abstützt.

Dies führt dazu, dass sich die gesamte Einheit aus der Bremsbelageinheit 8 und den beiden Keilelementen 5, 6 am Hilfsrahmen 4 in Umfangsrichtung verschiebt, bis sie am in Umfangsrichtung vom liegenden Anschlagsfläche - hier die Innenfläche des Schenkels 11a des u-förmigen Hilfsrahmens 4 - zur Anlage kommt (Fig. 2c).

Der Aktuator, der auf die Keilelemente 5, 6 einwirkt, wird dadurch deutlich von Reaktionskräften entlastet, die sich am Hilfsrahmen 4 abstürzen.

Dreht sich die Drehrichtung der Bremsscheibe 2 (beispielsweise bei einem Parken auf eine durch Seebewegung schwankenden Fähre), bewegt sich die Einheit aus Bremsbelag und den beiden Keilelemente gegen den gegenüberliegende, jetzt in Umfangsrichtung liegenden Anschlag, hier die Innenfläche des Schenkels 11c des Hilfsrahmen 4.

Die Kräfteverhältnisse während einer Bremsung sind in Fig. 1b wiedergegeben. Dabei sind die Keilwinkel an den Flächen 12, 14 bzw. 13, 15 relativ zur Bremsscheibenreibfläche 2a mit $\alpha 1$ bzw. $\alpha 2$ bezeichnet.

Aus der vorliegenden Beschreibung wird deutlich, dass erfindungsgemäß nicht der Bremsbelag allein gegen einen Keil verschoben wird, sondern die sich innerhalb eines bremssattelfesten Käfigs bzw. Hilfsrahmens 4 frei bewegbaren Keilelemente 5, 6 gegeneinander, welche dann die Bremsbelageinheit 7 an die Bremsscheibe 2 drücken (Fig. 2a, Fig. 2b).

Nach dem Anlegen des Belags 8 an die Bremsscheibe 2 werden der Bremsbelag 8 und die beiden Keilelemente 5, 6 von der Bremsscheibe 2 mitgenommen, bis der in Drehrichtung der Scheibe gelegene Keil an der in Drehrichtung gelegenen Wand des bremssattelfesten Käfigs anliegt. Nun wird die Bremskraft Fbrems sowie der sich aus der Selbstverstärkung ergebende Anteil FVerstärk an der Zuspannkraft in den Sattel abgeleitet, ohne den Aktuator zu belasten.

Für die Bremskraft Fbrems ergibt sich dann (ohne Reibung innerhalb des Mechanismus gerechnet):

$$F_{brems} = F_{Zuspann} \cdot \mu$$

$\mu$ = Reibwert.zwischen Belag und Scheibe

$$F_{brems} = (F_{Vorspann1} + F_{Vorspann2} + F_{Verstärk}) \cdot \mu$$

mit

$$F_{Vorspann1} = F_{Keil} / \tan\alpha 1$$

$$F_{Vorspann2} = F_{Keil} / \tan\alpha 2$$

$$F_{Verstärk} = F_{brems} / \tan\alpha 2$$

ergibt sich

$$F_{brems} = (F_{Keil} / \tan\alpha 1 + F_{Keil} / \tan\alpha 2 + F_{brems} / \tan\alpha 2) \cdot \mu$$

$$F_{brems} \cdot (\tan\alpha 2 - \mu) / \tan\alpha 2 = F_{Keil} \cdot \mu / \tan\alpha 1 + F_{Keil} \cdot \mu / \tan\alpha 2$$

$$F_{brems} = \mu \cdot (F_{Keil} / \tan\alpha 1 + F_{Keil} / \tan\alpha 2) \cdot \tan\alpha 2 / (\tan\alpha 2 - \mu)$$

$$(1) \quad F_{brems} = \frac{\mu \cdot F_{Keil} \cdot (\tan\alpha 2 / \tan\alpha 1 + 1)}{(\tan\alpha 2 - \mu)}$$

Bei entgegen gesetzter Fahrtrichtung müssen die Indizes vertauscht werden. Durch eine Wahl unterschiedlicher Keilwinkel für Die Vorwärts- und Rückwartsfahrt (Winkel $\alpha 1$, $\alpha 2$) kann die Selbstverstärkung für die Fahrtrichtungen unterschiedlich eingestellt werden. Geht man von gleichen Keilwinkeln $\alpha 1 = \alpha 2 = \alpha$ für Vorwärts und Rückwärtsfahrt aus, ergibt sich:

$$\text{(2)} \quad F_{brems} = \frac{2\,\mu\,F_{Keil}}{(\tan\alpha - \mu)}$$

Man erkennt bei (1) und (2) bei einem Keilwinkel von $\alpha$ bzw. $\alpha 2 = \arctan \mu$ eine Unstetigkeitsstelle, bei der Fbrems nicht mehr von FKeil abhängt.

Bei kleineren Winkeln dreht sich das Vorzeichen zwischen Fbrems und FKeil um, was bedeutet, dass nun gezogen werden müsste, was bei der vorliegenden Anordnung aber nicht möglich wäre. Daher muss gelten: $\alpha, \alpha 1, \alpha 2 > \arctan \mu$.

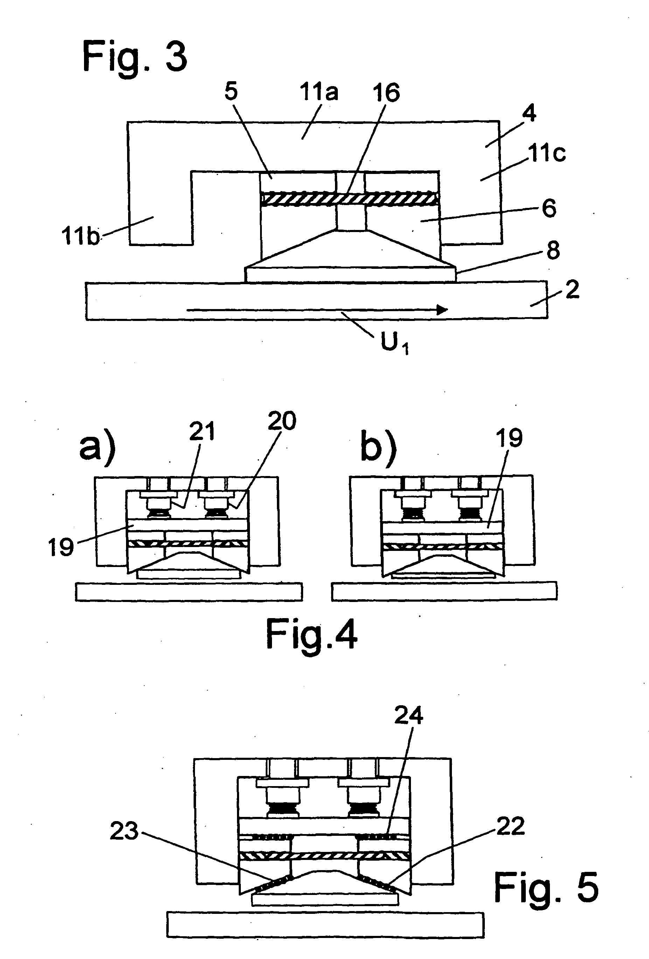

Fig. 4 zeigt eine Variante, bei welcher im Hilfsrahmen eine Nachstellplatte 19 parallel zur Bremsscheibendrehachse relativ zum Grundschenkel 11 a des Hilfsrahmens 4 beweglich angeordnet ist, um Bremsbelagverschleiß auszugleichen. Dies kann mittels eines oder mehrer Nachstellkolben 20, 21 erfolgen die axial längenveränderlich sind und z.B. aus einer im Hilfssattel 4 und an der Nachstellplatte 19 arretierten Spindel-/Mutterkombination mit elektromotorischem Antrieb bestehen (letzterer hier nicht dargestellt). Die Keilelemente sind dabei an der Nachstellplatte in Umfangsrichtung beweglich geführt. Die Längevergrößerung zum Ausgleich von Belagverschleiß verdeutlicht das Zusammenspiel aus Fig. 4a) und b).

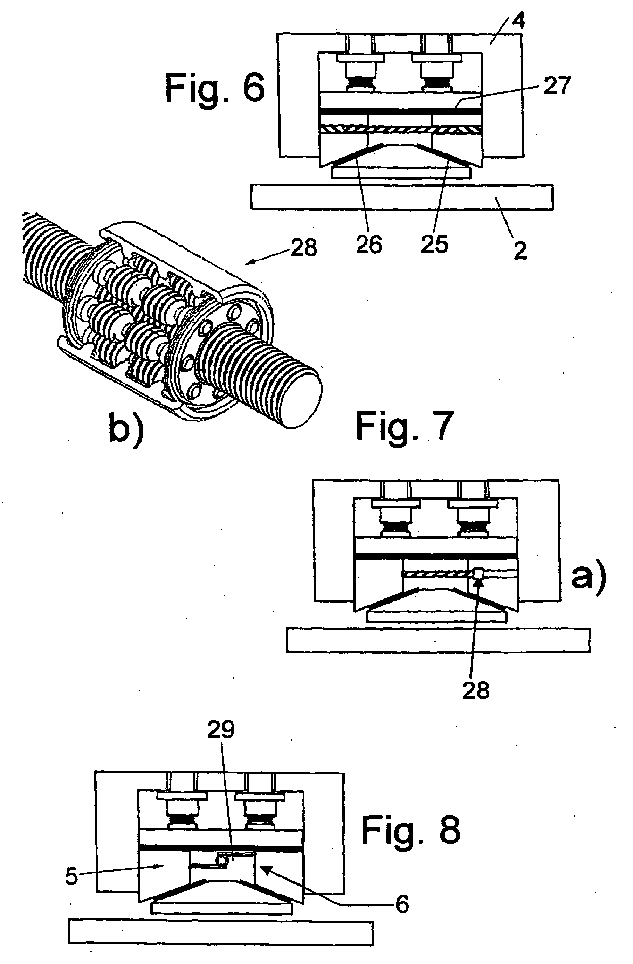

Fig. 5 und 6 zeigen, dass zwischen den Keilflächen 12, 13 und 14, 15 sowie zwischen der Nachstellplatte 19 oder dem Grundschenkel 11a und den Keilelementen Lagereinrichtungen, insbesondere Wälzlager 22, 23, 24 (Fig. 5) oder Gleitlager 25, 26, 27 (Fig. 6) angeordnet werden können.

Die Keilelemente 5, 6 können an sich mit beliebigen Getriebeanordnungen bzw. kraftübertragenden Bauelementen relativ zueinander bewegt werden, die elektromotorisch angetrieben werden können. Als Getriebeanordnungen sind denkbar:

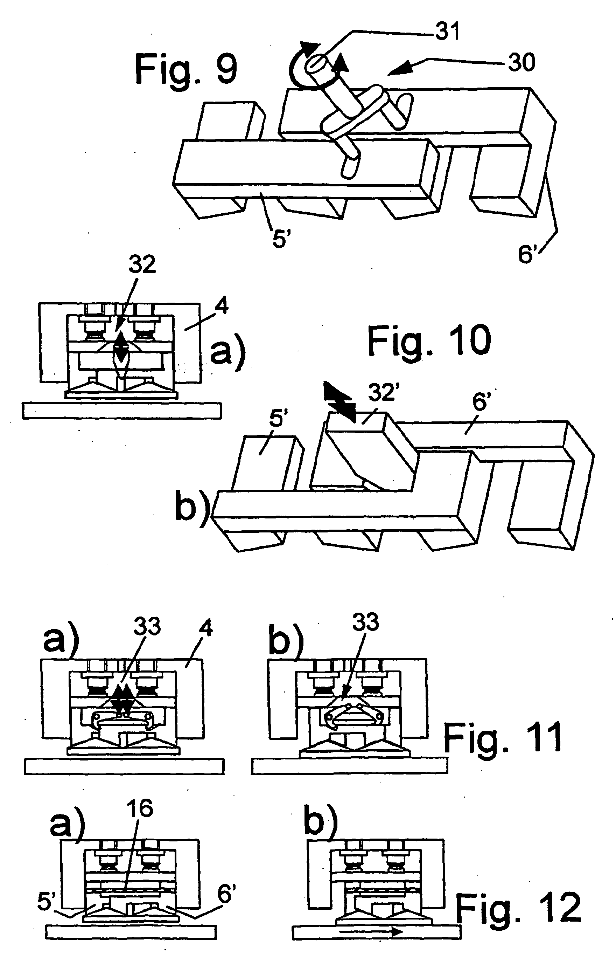

a) Spindeln 15, die auch als Kugelumlaufspindeln ausgebildet sein können (Fig. 2 - 6),
b) Planetenwälzgetriebe 28 (Fig. 7a, b),
c) eine Zahnstangenanordnung 29 als Antrieb zwischen den Keilelementen 5,6 (Fig. 8),
d) eine Verspannanordnung 30 mit Exzentern 31 (Fig. 9), die beispielsweise zwischen ineinandergreifenden Doppelkeilelementen 5', 6' an einer Druckplatte 8' mit korrespondierender Doppelkeilanordnung 34 wirken;
e) eine Verspannanordnung 32 mit Spreizkeilen 32' (Fig. 10a, b), die beispielsweise zwischen ineinandergreifenden Doppelkeilelementen 5', 6' an einer Druckplatte 8' mit korrespondierender Doppelkeilanordnung 34 wirken;
f) eine Hebelanordnung 33, beispielsweise mit einem Hebelpaar (Fig. 11a, 11b), die beispielsweise zwischen ineinandergreifenden Doppelkeilelementen 5', 6' an einer Druckplatte 8' mit korrespondierender Doppelkeilanordnung 34 wirken.

Die Anordnung mit mehr als einer Keilpaarung je Drehrichtung ist anhand des Beispiels einer Doppelkeilpaarung auch in Fig. 12 dargestellt, die ineinandergreifenden Doppelkeilelementen 5', 6' an der Druckplatte 8' mit korrespondierender Doppelkeilanordnung 34 zeigt.

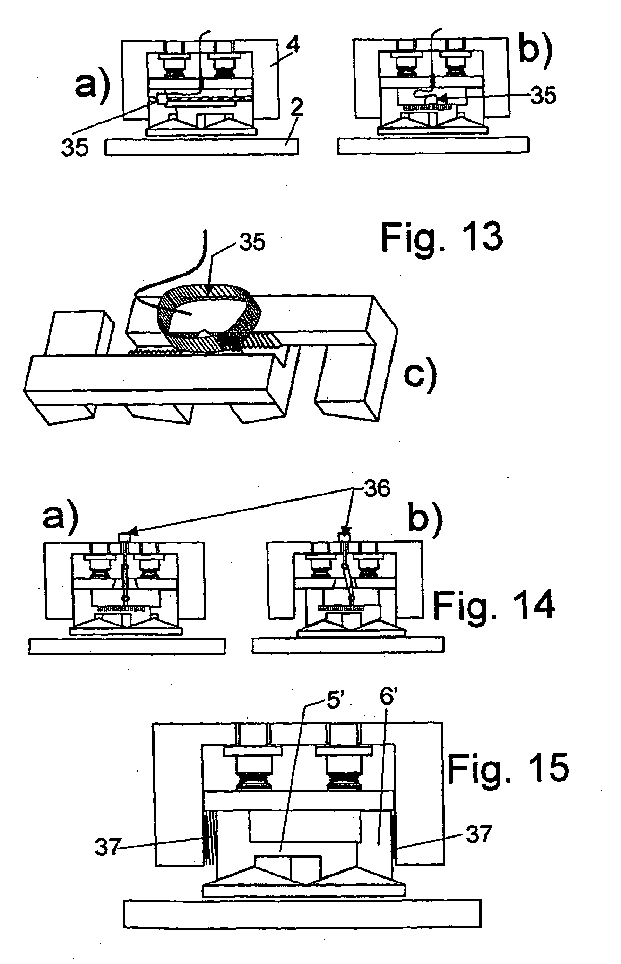

Auch die Doppelkeilelemente 5', 6' sind mittels einer Spindel 15' mit einem Elektromotor 35 relativ zueinander beweglich (Fig. 13a, b, c), der nach Fig. 13 im Hilfsrahmen montierbar ist. Denkbar ist auch eine Getriebeverbindung durch eine Öffnung im Hilfsrahmen 4 zum Bereich außerhalb des Hilfsrahmen 4 oder gar des gesamten Bremsrahmens bzw. -sattels 3 (Fig. 14, die eine Zahnstangenanordnung 35 und einen außenliegenden Elektromotor 36 offenbart. Am Bremssattel 3 kann auch ein elektronisches Steuergerät montiert sein.

Bei schneller Änderung der Drehrichtung, beziehungsweise in dem Moment, wenn der Bremsbelag die Bremsscheibe 2 berührt, wird der gesamte innere Aufbau gegen die nun in Fahrtrichtung befindliche Wand - den Anschlag am Schenkel 11b, c - geschleudert. Um Beschädigungen und übermäßige Belastungen zu vermeiden können Dämpferelemente 37 z.B. zwischen die Keilelemente 5, 6 und die Anschläge an den Schenkeln 11b, c montiert werden (Fig. 15).

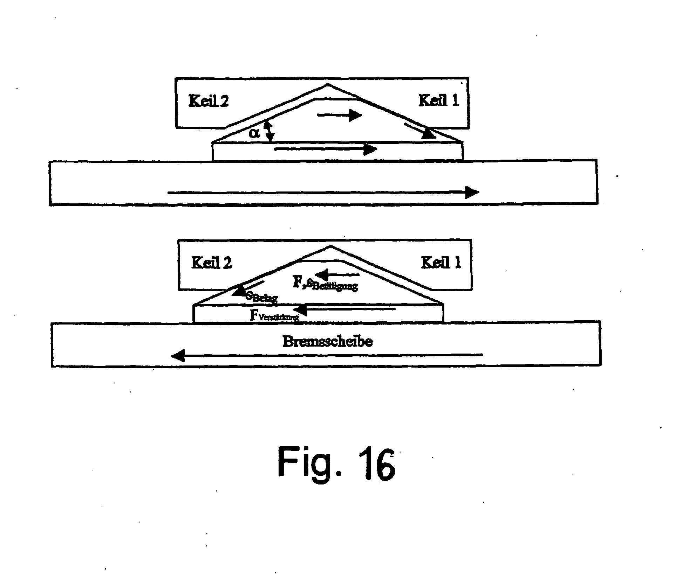

Fig. 16 zeigt den Stand der Technik, nach welchem sich Keilelemente 5, 6 am korrespondierenden Keilelementen 5, 6 direkt am Bremssattel 3 abstützen.

**Bezugzeichen**

| | |
|---|---|
| Bremsscheibendrehachse | X |
| Umfangsrichtungen | U1, U2 |

(fortgesetzt)

**Bezugzeichen**

| | |
|---|---|
| Scheibenbremse | 1 |
| Bremsscheibe | 2 |
| Bremsrahmen | 3 |
| Hilfsrahmen | 4 |
| Keilelemente | 5,6 |
| Bremsscheibenreibfläche | 2a |
| Bremsbelageinheit | 7 |
| Bremsbelag | 8 |
| Druckplatte | 9 |
| Bremsbelag | 10 |
| Grundschenkel | 11a |
| Längsschenkeln | 11b, 11c |
| Keilflächen | 12, 13 |
| Keilflächen | 14, 15 |
| Spindel | 16 |
| Bohrungen | 17, 18 |
| Nachstellplatte | 19 |
| Nachstellkolben | 20, 21 |
| Wälzlager | 22, 23, 24 |
| Gleitlager | 25, 26, 27 |
| Planetenwälzgetriebe | 28 |
| Zahnstangenanordnung | 29 |
| Verspannanordnung | 30 |
| Exzenter | 31 |
| Verspannanordnung | 32 |
| Spreizkeile | 32' |
| Hebelanordnung | 33 |
| Doppelkeilanordnung | 34 |
| Elektromotor | 35 |
| Elektromotor | 36 |
| Dämpferelemente | 37 |

**Patentansprüche**

1. Scheibenbremse, insbesondere Teilbelagscheibenbremse, mit einem elektromechanischen Aktuator und einer Zuspannvorrichtung in selbstverstärkender Bauart, die als Selbstverstärkungseinrichtung eine Keilanordnung aufweist, welche dazu ausgelegt ist, einen Bremsbelag (8) gegen eine Bremsscheibe (2) zu drücken, wobei zum Zuspannen des zuspannseitigen wenigstens zwei relativ zueinander bewegliche Keilelemente an einem Bremssattel bzw. -rahmen (3) oder an einem Hilfsrahmen (4) angeordnet sind, welche dazu ausgelegt sind, auf den Bremsbelag (8) über eine zwischen dem Bremsbelag und den Keilelementen angeordnete trapezförmige Druckplatte - Keilplatte (9) - einzuwirken, **dadurch gekennzeichnet, dass** die Keilelemente parallel zur Bremsscheibe (2) beweglich am Bremssattel (3) oder am Hilfsrahmen (4) angeordnet sind.

2. Scheibenbremse nach Anspruch 1, **dadurch gekennzeichnet, dass** die Keilplatte (9) der Bremsbelageinheit (7) in einer Draufsicht auf die Scheibenbremse einen Querschnitt in Form eines nicht gleichschenkligen oder eines gleichschenkligen Trapezes aufweist.

3. Scheibenbremse nach einem der vorstehenden Ansprüche, **gekennzeichnet durch** eine Auslegung derart, dass eine Einheit aus den Keilelementen (5, 6) und der Bremsbelageinheit (7) bei Bremsungen gemeinsam am Bremssattel (3) oder am Hilfsrahmen (4) parallel zur Bremsscheibenreibfläche (2a) gegen Anschläge beweglich ist.

**4.** Scheibenbremse nach einem der vorstehenden Ansprüche, **dadurch gekennzeichnet, dass** der Hilfsrahmen (4) eine U-Form aufweist und mit einem Grundschenkel (11a) versehen ist, der an seinen beiden Enden von Längsschenkeln (11b, 11c) begrenzt ist, die sich vom Grundschenkel (7) in Richtung der Bremsscheibe erstrecken und die als die Anschläge für die Keilelemente (5, 6) bei deren Bewegungen in Umfangsrichtung in Abhängigkeit von der Drehrichtung (U1, U2) der Bremsscheibe (2) dienen.

**5.** Scheibenbremse nach einem der vorstehenden Ansprüche, **dadurch gekennzeichnet, dass** die Druckplatte (9) an ihrer von der Bremsscheibe abgewandten Seite eine Trapezform mit zwei zueinander geneigten Keilflächen (12, 13) aufweist, die an den ebenfalls zueinander geneigten Keilflächen (14, 15) der Keilelemente (5, 6) anliegen.

**6.** Scheibenbremse nach einem der vorstehenden Ansprüche, **dadurch gekennzeichnet, dass** die Beweglichkeit der Keilelemente (5, 6; 5',6') relativ zueinander mit Hilfe eines Elektromotors (35, 36) realisiert ist, der auf eine Anordnung von Getriebeelementen einwirkt.

**7.** Scheibenbremse nach einem der vorstehenden Ansprüche, **dadurch gekennzeichnet, dass** die Getriebeelemente eine elektromotorisch angetriebene Spindel (15) umfassen, welche die Keilelemente (5, 6) in der einen Drehrichtung aufeinander zu und in der anderen Drehrichtung der Spindel (15) voneinander weg bewegen.

**8.** Scheibenbremse nach einem der vorstehenden Ansprüche, **dadurch gekennzeichnet, dass** die Spindel (15) als Kugelumlaufspindel ausgelegt ist.

**9.** Scheibenbremse nach einem der vorstehenden Ansprüche, **dadurch gekennzeichnet, dass** die Getriebeelemente eine Gewindespindel (15) umfassen.

**10.** Scheibenbremse nach einem der vorstehenden Ansprüche, **dadurch gekennzeichnet, dass** die Getriebeelemente wenigstens eines oder mehrere der folgenden Elemente umfassen:

a. die wenigstens eine Spindel (15),
b. wenigstens ein Planetenwälzgetriebe (28),
c. eine Zahnstangenanordnung (29) als Antrieb zwischen den Keilelementen (5, 6),
d. eine Verspannanordnung (30) mit Exzentern (31);
e. eine Verspannanordnung (32) mit Spreizkeilen (33);
f. eine Hebelanordnung.

**11.** Scheibenbremse nach einem der vorstehenden Ansprüche, **dadurch gekennzeichnet, dass** die Keilelemente (5, 6) jeweils mehr als eine Keilfläche aufweisen.

**12.** Scheibenbremse nach einem der vorstehenden Ansprüche, **dadurch gekennzeichnet, dass** die Keilelemente als Doppelkeilpaarung mit ineinander greifenden Doppelkeilelementen (5', 6') ausgebildet sind, die an einer Druckplatte (8') mit korrespondierender Doppelkeilanordnung (34) anliegen.

**13.** Scheibenbremse nach einem der vorstehenden Ansprüche, **dadurch gekennzeichnet, dass** der Elektromotor (35, 36) am Hilfsrahmen montiert ist.

**14.** Scheibenbremse nach einem der vorstehenden Ansprüche, **dadurch gekennzeichnet, dass** der Elektromotor (35, 36) an der Außenfläche des Bremssattels montiert ist und mit den Keilelementen über eine Getriebeverbindung verbunden ist.

**15.** Scheibenbremse nach einem der vorstehenden Ansprüche, **dadurch gekennzeichnet, dass** die Getriebeverbindung eine Zahnstangenanordnung aufweist.

**16.** Scheibenbremse nach einem der vorstehenden Ansprüche, **dadurch gekennzeichnet, dass** am Bremssattel (3) ein elektronisches Steuergerät angeordnet ist.

**17.** Scheibenbremse nach einem der vorstehenden Ansprüche, **dadurch gekennzeichnet, dass** Dämpferelemente zwischen den Keilelemente (5, 6) und den Anschlägen an den Längsschenkeln (11b, c) montiert sind.

**18.** Scheibenbremse nach einem der vorstehenden Ansprüche, **dadurch gekennzeichnet, dass** die Keilelemente (5, 6) zum Ausgleich von Belagverschleiß auch in einer Richtung parallel zur Bremsscheibendrehachse (X) relativ zum Bremssattel (3) verschieblich sind.

**19.** Scheibenbremse nach einem der vorstehenden Ansprüche, **dadurch gekennzeichnet, dass** die Keilelemente (5, 6) beweglich an einer Nachstellplatte (19) angeordnet sind, die am Hilfsrahmen (4) oder am Bremssattel parallel zur Bremsscheibendrehachse beweglich angeordnet ist.

**20.** Scheibenbremse nach einem der vorstehenden Ansprüche, **dadurch gekennzeichnet, dass** zwischen dem Bremssattel (3) oder dem Hilfsrahmen (4) und der Nachstellplatte (19) axial längenveränderliche Nachstellkolben (20, 21) angeordnet sind.

**21.** Scheibenbremse nach einem der vorstehenden Ansprüche, **dadurch gekennzeichnet, dass** zwischen den Keilflächen (12, 13) und (14, 15) sowie zwischen der Nachstellplatte (19) oder dem Grundschenkel (11a) und den Keilelementen Lagereinrichtungen, insbesondere Wälzlager (22, 23, 24; Fig. 5) oder Gleitlager (2S, 26, 27; Fig. 6) angeordnet sind.


## Claims

**1.** A disk brake, in particular a part-lining disk brake, having an electromechanical actuator and an application device of self-energizing type, which as self-energizing device has a wedge arrangement designed to press a brake lining (8) against a disk brake (2), at least two wedge elements moveable relative to one another being arranged on a brake caliper or frame (3) or on an auxiliary frame (4) for applying the application-side [brake lining], said elements being designed to act on the brake lining (8) via an between the brake lining and the wedge elements arranged trapezoidal pressure plate - wedge plate (9), **characterized in that** the wedge elements are arranged on the brake caliper (3) or on the auxiliary frame (4) so that they can move parallel to the brake disk (2).

**2.** The disk brake as claimed in claim 1, **characterized in that** in a top view of the disk brake the wedge plate (9) of the brake lining unit (7) has a cross section in the shape of a scalene trapezium or an isosceles trapezoid.

**3.** The disk brake as claimed in one of the preceding claims, **characterized by** a design configuration such that a unit comprising the wedge elements (5, 6) and the brake lining unit (7) can during braking sequences be moved together on the brake caliper (3) or on the auxiliary frame (4) parallel to the brake disk friction surface (2a) against stops.

**4.** The disk brake as claimed in one of the preceding claims, **characterized in that** the auxiliary frame (4) has a U-shape and is provided with a base member (11a), which is bounded at both ends by longitudinal members (11b, 11c), which extend from the base member (7) in the direction of the brake disk and which serve as stops for the wedge elements (5, 6) in their movements in a peripheral direction according to the direction of rotation (U1, U2) of the brake disk (2).

**5.** The disk brake as claimed in one of the preceding claims, **characterized in that** the pressure plate (9) on its side remote from the brake disk has a trapezoidal shape with two wedge faces (12, 13) inclined towards one another, which bear against the wedge faces (14, 15) of the wedge elements (5, 6), likewise inclined towards one another.

**6.** The disk brake as claimed in one of the preceding claims, **characterized in that** the mobility of the wedge elements (5, 6; 5', 6') relative to one another is achieved by means of an electric motor (35, 36), which acts on an arrangement of transmission elements.

**7.** The disk brake as claimed in one of the preceding claims, **characterized in that** the transmission elements comprise an electric motor-driven spindle (15), which in one direction of rotation moves the wedge elements (5, 6) towards one another and in the other direction of rotation of the spindle (15) moves them away from one another.

**8.** The disk brake as claimed in one of the preceding claims, **characterized in that** the spindle (15) is designed as a recirculating ball screw.

**9.** The disk brake as claimed in one of the preceding claims, **characterized in that** the transmission elements comprise a threaded spindle (15).

10. The disk brake as claimed in one of the preceding claims, **characterized in that** the transmission elements comprise at least one or more of the following elements:

    a. at least one spindle (15),
    b. at least one planetary rolling contact mechanism (28),
    c. a toothed rack arrangement (29) as drive between the wedge elements (5, 6),
    d. a bracing arrangement (30) with eccentrics (31);
    e. a bracing arrangement (32) with expansion wedges (33);
    f. a lever arrangement

11. The disk brake as claimed in one of the preceding claims, **characterized in that** the wedge elements (5, 6) each have more than one wedge face.

12. The disk brake as claimed in one of the preceding claims, **characterized in that** the wedge elements are embodied as a pair of double wedges with intermeshing double wedge elements (5', 6'), which bear against a pressure plate (8') with corresponding double wedge arrangement (34).

13. The disk brake as claimed in one of the preceding claims, **characterized in that** the electric motor (35, 36) is mounted on the auxiliary frame.

14. The disk brake as claimed in one of the preceding claims, **characterized in that** the electric motor (35, 36) is mounted on the outside face of the brake caliper and is connected to the wedge elements via a transmission connection.

15. The disk brake as claimed in one of the preceding claims, **characterized in that** the transmission connection has a toothed rack arrangement.

16. The disk brake as claimed in one of the preceding claims, **characterized in that** an electronic control unit is arranged on the brake caliper (3).

17. The disk brake as claimed in one of the preceding claims, **characterized in that** damping elements are fitted between the wedge elements (5, 6) and the stops on the longitudinal members (11b, c).

18. The disk brake as claimed in one of the preceding claims, **characterized in that** the wedge elements (5, 6) are displaceable relative to the brake caliper (3) also in a direction parallel to the brake disk axis of rotation (X), in order to compensate for brake lining wear.

19. The disk brake as claimed in one of the preceding claims, **characterized in that** the wedge elements (5, 6) are moveably arranged on an adjustment plate (19), which is arranged on the auxiliary frame (4) or on the brake caliper so that it can move parallel to the brake disk axis of rotation.

20. The disk brake as claimed in one of the preceding claims, **characterized in that** adjustment pistons (20, 21) of axially variable length are arranged between the brake caliper (3) or the auxiliary frame (4) and the adjustment plate (19).

21. The disk brake as claimed in one of the preceding claims, **characterized in that** bearing devices, in particular roller bearings (22, 23, 24; Fig. 5) or slide bearings (25, 26 27; Fig. 6) are arranged between the wedge faces (12, 13) and (14, 15) and between the adjustment plate (19) or the base member (11a) and the wedge elements.

**Revendications**

1. Frein à disque, en particulier frein à disque à garniture partielle, à un actionneur électromécanique et un dispositif de serrage de frein en structure à renfort automatique, qui, étant un dispositif à renfort automatique, comprend un mécanisme de calage conçu au but de presser une garniture de frein (8) contre un disque de frein (2), à au moins deux éléments de calage mobiles l'un relativement à l'autre étant disposés à un étrier ou châssis de frein (3) ou un faux-châssis (4) à serrer ladite garniture de frein du côté de serrage du frein, qui sont conçus de façon à agir sur ladite garniture de frein (8) via une plaque de serrage - plaque de calage (9) - trapézoïdale, qui est disposée entre ladite garniture de frein et lesdits éléments de calage, **caractérisé en ce que** lesdits éléments de calage sont disposés en parallèle audit disque de frein (2) de façon mobile audit étrier de frein (3) ou audit faux-châssis (4).

2. Frein à disque selon la revendication 1, **caractérisé en ce qu'**en vue d'en haut, ladite plaque de calage (9) du module à garniture de frein (7) présente une section transversale sous forme d'un trapèze non isocèle ou d'un trapèze isocèle.

3. Frein à disque selon une quelconque des revendications précédentes, **caractérisé en ce qu'**au cas de serrage des freins, une unité constitué par lesdits éléments de calage (5, 6) et ledit module à garniture de frein (7) est mobile en commun audit étrier de frein (3) ou audit faux-châssis (4) en parallèle à l'aire de friction (2a) du disque de frein contre des butées.

4. Frein à disque selon une quelconque des revendications précédentes, **caractérisé en ce que** ledit faux-châssis (4) présente une forme en U et est doté d'une branche de base (11a) limitée, à ses deux extrémités, par des branches longitudinales (11b, 11c) s'étendant à partir de ladite branche de base (7) en un sens vers ledit disque de frein, qui servent en tant que lesdites butées pour lesdits éléments de calage (5, 6) au cas de leur mouvement en sens périphérique en fonction de la direction du mouvement rotatoire (U1, U2) dudit disque de frein (2).

5. Frein à disque selon une quelconque des revendications précédentes, **caractérisé en ce que** ladite plaque de serrage (9) présente, à son côté opposé audit disque de frein, une forme trapézoïdale à deux aires de calage (12, 13) inclinées l'une vers l'autre, qui portent contre les aires de calage (14, 15) desdits éléments de calage (5, 6), qui sont également inclinées l'une vers l'autre.

6. Frein à disque selon une quelconque des revendications précédentes, **caractérisé en ce que** la mobilité desdits éléments de calage (5, 6 ; 5', 6') l'un relativement à l'autre est réalisée moyennant un moteur électrique (35, 36), qui agit sur un arrangement des éléments de transmission.

7. Frein à disque selon une quelconque des revendications précédentes, **caractérisé en ce que** les éléments de transmission comprennent une broche (15) à entraînement électromoteur, qui, à une première direction de mouvement rotatoire, déplace lesdits éléments de calage (5, 6) en les rapprochant l'un vers l'autre, et, à l'autre direction de mouvement rotatoire de ladite broche, en les éloignant l'un de l'autre.

8. Frein à disque selon une quelconque des revendications précédentes, **caractérisé en ce que** ladite broche (15) est conçue sous forme d'une broche rotatoire à circulation des billes.

9. Frein à disque selon une quelconque des revendications précédentes, **caractérisé en ce que** lesdits éléments de transmission comprennent une broche filetée (15).

10. Frein à disque selon une quelconque des revendications précédentes, **caractérisé en ce que** lesdits éléments de transmission comprennent au moins un ou plusieurs des éléments suivants :

    a) ladite au moins une broche (15) ;
    b) au moins un engrenage planétaire à roulement (28) ;
    c) mécanisme à crémaillère ;
    d) un mécanisme de serrage (30) aux excentriques (31) ;
    e) un mécanisme de serrage (32) aux clavettes écarteurs ;
    f) un mécanisme à levier.

11. Frein à disque selon une quelconque des revendications précédentes, **caractérisé en ce que** chacun desdits éléments de calage (5, 6) comprend plus d'une aire de calage respective.

12. Frein à disque selon une quelconque des revendications précédentes, **caractérisé en ce que** lesdits éléments de calage sont conçus sous forme d'une paire à clavettes double aux éléments de calage double (5', 6') l'un en prise de l'autre, qui portent contre une plaque de serrage (8') à un arrangement correspondant des clavettes doubles (34).

13. Frein à disque selon une quelconque des revendications précédentes, **caractérisé en ce que** ledit moteur électrique (35, 36) est monté audit faux-châssis.

**14.** Frein à disque selon la revendication 13, **caractérisé en ce que** ledit moteur électrique (35, 36) est monté à la surface extérieure dudit étrier de frein, en étant relié auxdits éléments de calage via une connexion à engrenage.

**15.** Frein à disque selon une quelconque des revendications précédentes, **caractérisé en ce que** ladite connexion à engrenage comprend un mécanisme à crémaillère.

**16.** Frein à disque selon une quelconque des revendications précédentes, **caractérisé en ce qu'**un dispositif de commande électronique est disposé audit étrier de frein (3).

**17.** Frein à disque selon une quelconque des revendications précédentes, **caractérisé en ce que** des éléments amortisseurs sont montés entre lesdits éléments de calage (5, 6) et lesdites butées auxdites branches longitudinales (11b, c).

**18.** Frein à disque selon une quelconque des revendications précédentes, **caractérisé en ce que** lesdits éléments de calage (5, 6) sont déplaçables également en un sens parallèle à l'axe de rotation dudit disque de frein (X) relativement audit étrier de frein (3) pour la compensation de l'usure de garniture.

**19.** Frein à disque selon une quelconque des revendications précédentes, **caractérisé en ce que** lesdits éléments de calage (5, 6) sont disposés de façon mobile à une plaque de rattrapage (19) qui est disposée, de façon mobile, audit faux-châssis (4) ou audit étrier de frein en parallèle à l'axe de rotation dudit disque de frein.

**20.** Frein à disque selon une quelconque des revendications précédentes, **caractérisé en ce que** des pistons de rattrapage (20, 21) à longueur variable en sens axial sont disposés entre ledit étrier de frein (3) ou ledit faux-châssis (4) et ladite plaque de rattrapage (19).

**21.** Frein à disque selon une quelconque des revendications précédentes, **caractérisé en ce que** des moyens de palier, en particulier des paliers à roulement (22, 23, 24 ; fig. 5) ou des paliers à glissement (25, 26, 27 ; fig. 6) sont disposés entre lesdits aires de calage (12, 13) et (14, 15) et également entre ladite plaque de rattrapage (19) ou ladite branche de base (11a) et lesdits éléments de calage.

Fig. 1a

EP 1 979 644 B1

EP 1 979 644 B1

## Fig. 1b

Keil 2

Keil 1

$F_{Keil}$

$\alpha_2$

$\alpha_1$

$F_{Vorspann1}$

$F_{Zuspann}$

$F_{Verstärk}$

$F_{Vorspann2}$

$F_{Bremse}$

X

Bremsscheibe

$U_1$

Fig.2

a)

b)

c)

d)

Fig. 3

Fig.4

Fig. 5

Fig. 6

Fig. 7

b)

a)

Fig. 8

Fig. 9

Fig. 10

Fig. 11

Fig. 12

a)

4

35

b)

35

2

**Fig. 13**

35

c)

a)

36

b)

**Fig. 14**

5'      6'

37

37

**Fig. 15**

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1291951
- US 20040154881 A
- FR 1380194 A